# EUROPEAN PATENT SPECIFICATION

(11) **EP 2 310 158 B1**
(45) Date of publication and mention of the grant of the patent: **08.02.2012**
(21) Application number: 09769642.1
(22) Date of filing: 23.06.2009
(51) Int. Cl.: B23B 31/107

(54) **CLAMPING DEVICE FOR A SPINDLE AND/OR ELECTRIC SPINDLE AND RELATED SPINDLE AND/OR ELECTRIC SPINDLE**
KLEMMVORRICHTUNG FÜR EINE SPINDEL UND/ODER ELEKTRISCHE SPINDEL UND VERWANDTE SPINDEL UND/ODER ELEKTRISCHE SPINDEL
DISPOSITIF DE SERRAGE POUR BROCHE ET/OU ÉLECTRO-BROCHE, ET BROCHE ET/OU ÉLECTRO-BROCHE ASSOCIÉES

(30) Priority: 27.06.2008 IT VI20080153
(43) Date of publication of application: 20.04.2011
(73) Proprietor: Saccardo, Elettromeccanica, S.r.l., 36014 Santorso (VI) (IT); Vigato, Fabio, 36030 Valli del Pasubio (Vicenza) (IT)
(72) Inventor: VIGATO, Fabio, I-36030 Valli del Pasubio (Vicenza) (IT)
(74) Representative: Ziliotto, Tiziano
(86) International application number: PCT/IB2009/006042
(87) International publication number: WO 2009/156829

(56) References cited:
- WO-A-00/33995
- DE-A1- 4 445 611
- GB-A- 2 285 237
- US-B1- 6 375 398

## Description

The present invention concerns the sector of machine tools.

In particular, the present invention concerns a clamping device for a tool holder used in machine tools for machining metallic and non-metallic alloys, wood, glass, stone and synthetic materials.

More precisely, the invention concerns a clamping device that can be preferably installed on a tool holder spindle whose inside is suitable for the passage of a coolant and/or lubricant to be conveyed towards a rotary tool.

The invention also concerns a spindle and an electric spindle equipped with the above mentioned clamping device.

As already known, in the machine tools suitable for processing various materials like, for example, marble, granite, glass, metal and the like, a tool is set rotating around its own axis by means of a suitable mechanical member or shaft that is called spindle.

As is known, the spindle comprises on one side an element for coupling with the rotary shaft of a machine tool and on the other side a taper fit equipped with an internal locking or clamping device for retaining the tool - also called collet - and more particularly for clamping the tang of the tool holder.

Among the clamping devices for tool holder tangs, the clamping devices with balls are known, the so-called ball collets.

This type of device comprises a tubular support slidingly and axially coupled with the rotary shaft of the spindle.

The tubular support defines a seat for the tool tang and is provided with one or more openings, each one facing said seat and suited to accomodate a ball.

The rotary shaft of the spindle is provided with an annular expansion seat suited to accomodate the above mentioned balls at least partially.

The support is axially movable and in particular it can move from at least one first axial position, in which the balls project from each opening towards the above mentioned seat, to at least one second axial position, in which the same balls are arranged in said annular expansion seat in order to allow the tool to be released.

The device also comprises a tie rod, also called tie shaft, slidingly and axially coupled with said spindle shaft, suitable for interfering with the support in order to move it from the first axial position to the second axial position.

A Belleville washer, called also load spring, is interposed between the spindle shaft and the tie rod and is suited to maintain the tubular support in one of the above mentioned positions.

More particularly, the Belleville washer has one end that is integral with the spindle shaft and the other end that counteracts the tie rod.

The tie rod is moved by an actuator that can be controlled by the operator to determine the compression of the Belleville washer.

As is known, during some types of machining the tool must be cooled and/or lubricated. This is achieved by means of a fluid that is conveyed to the machining area through a duct made in the tool holder. More precisely, said duct reaches the tang of the tool holder and ends into said seat, in which the coolant and/or lubricant is introduced.

More particularly, the pressurized fluid is introduced in the seat through a feed duct created into the rod.

In other words, the passage of the coolant and/or lubricant is achieved by flooding the chamber for the expansion of the balls inside the spindle shaft.

Example of Prior Art clamping devices can be found in documents WO 00/33995A and GB 2285237

A first drawback posed by the clamping device of known type described above lies in that said balls break frequently. This means that their working life is limited.

A further drawback connected to the preceding one is represented by the fact that the spindle has low torsional load limits.

Another drawback lies in that the axial movement necessary for releasing the tool subjects the other mechanical members, like for example the Belleville washer, to considerable stress, thus causing their gradual deterioration over time and limiting their effectiveness.

Another drawback lies in that in the solutions currently available the mechanical resistance of the spindle-tool assembly is limited.

A further drawback is represented by the fact that the coolant and/or lubricant introduces impurities both in the expansion chamber and in the seat, and said impurities affect the operation of the balls and more particularly hinder their movement.

A further drawback connected to the preceding one is represented by the fact that the presence of the fluid in the seat and in the annular seat generates scales that affect the operation of the balls and at the same time do not allow a correct and continuous flow of the fluid at the level of the tool head to be guaranteed.

A further drawback is represented by the fact that the fluid introduced in the chamber generates turbulence and backflows into the chamber itself.

In view of the situation described above, a clamping device which overcomes or at least limits the drawbacks posed by the known art would be desirable. A clamping device and a related spindle and/or electric spindle which overcome the drawbacks encountered in the device and the related spindle and/or electric spindle described above would therefore be desirable.

It is therefore evident from the above that there is the need to identify alternative solutions which are more functional than the known solutions.

It is in particular a first object of the invention to produce a clamping device, a spindle and an electric spindle capable of enduring a greater work load compared to the equivalent devices of known type.

It is another object of the invention to produce a clamping device, a spindle and/or an electric spindle which for releasing the tool require less axial movement of its moving parts compared to the devices of known type, in such a way as to reduce stress, for example on the elastic means.

It is a further object of the invention to produce a clamping device, a spindle and/or an electric spindle in which the coolant and/or lubricant is conveyed directly towards the tool head.

It is another object of the invention to provide a clamping device, a spindle and/or an electric spindle that are more reliable than comparable spindles and/or electric spindles of known type.

It is another object of the invention to provide a clamping device, a spindle and/or an electric spindle that have longer working life than comparable spindles and/or electric spindles of known type.

The objects described above are achieved by a clamping device, a spindle and a related electric spindle described and characterized in the respective independent claims.

Advantageous embodiments of the invention are described in the dependent claims.

Advantageously, the proposed solution makes it possible to provide a spindle of the so-called ball type which is watertight, that is, in which the fluid is channeled directly towards the tool head, without affecting other parts of the spindle.

This advantageously makes it possible to prevent the fluid from being contaminated and from interfering with the operation of the other parts of the spindle.

More particularly, the proposed solution makes it possible to achieve the direct internal passage of said lubricant and/or coolant towards the tool in a watertight duct, that is, a direct canalization of the fluid in the tool holder duct

The objects and advantages illustrated above will be highlighted in greater detail in the description of some preferred embodiments of the invention, provided as non-limiting examples with reference to the attached drawings, wherein:
- Figure 1 shows a side view of an electric spindle comprising a spindle and a clamping device that are all subjects of the invention;
- Figure 1b shows a view of a partial longitudinal cross section of the electric spindle shown in Figure 1;
- Figure 2 shows a schematic longitudinal cross section of an example of embodiment of a spindle and a clamping device of Figure 1b in a first operating position;
- Figure 3 shows a schematic longitudinal cross section of the spindle and the clamping device of Figure 2 in a different operating position;
- Figure 4 shows a schematic and exploded view of a longitudinal cross section of the spindle and the clamping device shown in Figure 2;
- Figure 5 shows a schematic and exploded view of a longitudinal cross section of the clamping device shown in Figure 4;
- Figures from 6 to 10 show each a schematic and cross section view of a corresponding number of positions that can be assumed by the clamping device and the spindle of Figure 4 and in particular during the coupling and/or releasing of a tool holder.

By way of introduction, it is important to point out that corresponding components in different examples of embodiment are indicated by the same reference numbers.

In the case of a change in the position of the parts that make up the invention, the position indications given in the individual executive examples must be transferred, according to logic, to the new position.

It is also important to underline that, for a better understanding of the schematic diagrams attached, some parts of the non-limiting examples of embodiment shown can be represented using dotted lines.

While the following description, made with reference to the figures, illustrates some particular embodiments of the present invention, it is clear that the invention is not limited to said particular embodiments, rather, the individual embodiments described here below clarify different aspects of the present invention, the scope and purpose of which are defined in the claims.

The examples of embodiment described here below refer to a clamping device mounted on an electric spindle, that is, on a device suited to set a tool comprising a spindle and an electric motor rotating.

More particularly, the electric spindle is of the type suitable for conveying a coolant and/or lubricant towards a tool mounted on a rotary shaft of a machine tool, preferably of the NC type.

Said electric spindle is suitable for equipping machines for processing various materials, like for example stone, marble or metals, glass, wood, etc., where it is necessary, for some types of machining, to convey the above mentioned coolant and/or lubricant towards the tool and to replace the tool even automatically.

It is clear that the solution proposed can be applied to any spindle or electric spindle including an operating mode with a lubricant and/or coolant

More generally, the clamping device that is the subject of the invention can be installed on a spindle, which is also the subject of the invention, of the type suitable for guaranteeing the automatic coupling/release of the tool and the flow of lubricant/coolant to the tool in machines used for removing material.

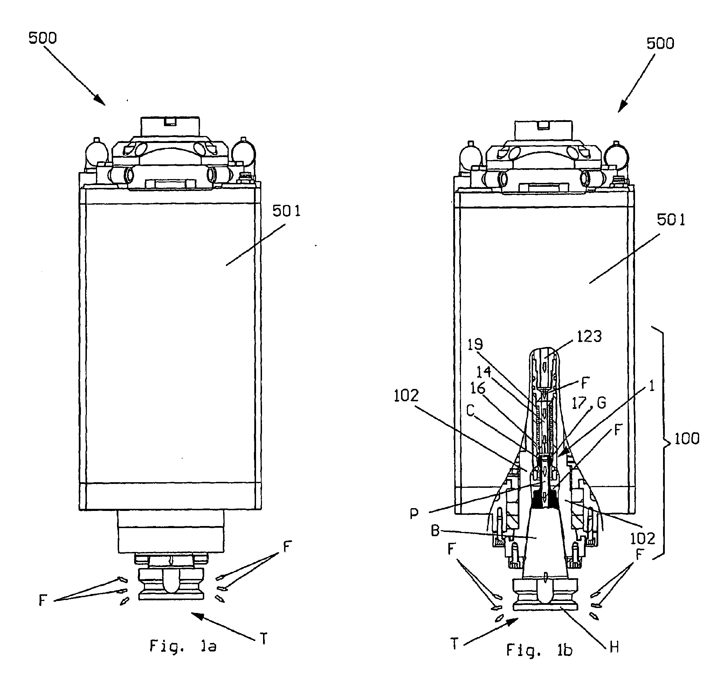

An example of application of the solution that is the subject of the invention is illustrated in Figures 1a and 1b, showing an electric spindle indicated as a whole by 500, which is also the subject of the present invention.

The electric spindle 500 comprises a spindle 100 and an electric motor, not represented, arranged inside the frame 101.

The motor is suited to set the spindle shaft 102 rotating, inside which there is the clamping device 1.

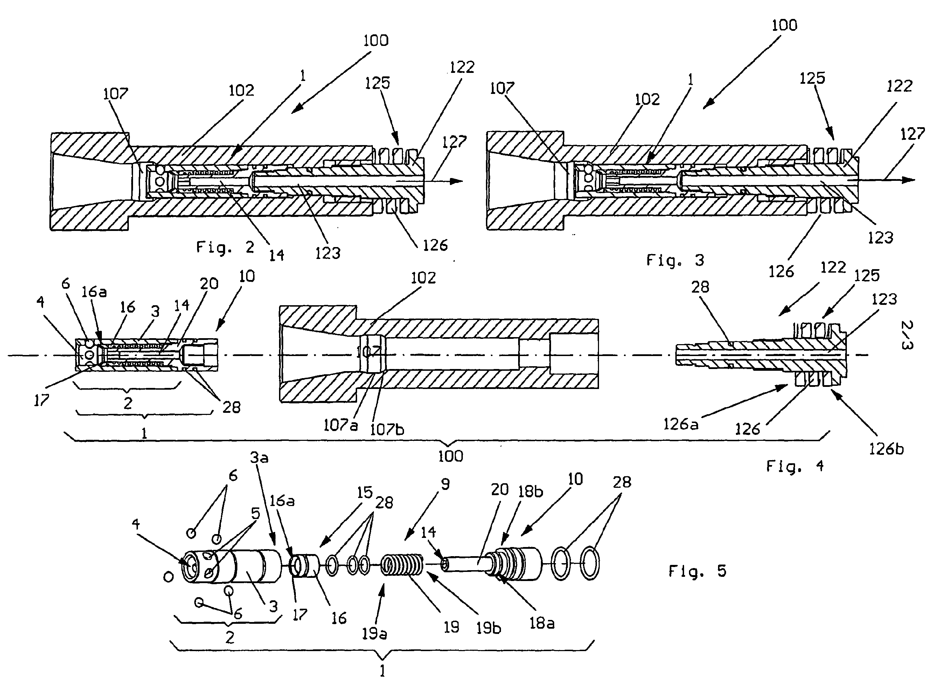

More particularly, the spindle 100, shown in detail in Figures 2, 3 and 4, comprises a spindle shaft 102 and a clamping device 1 of a tool holder T.

The clamping device 1, shown in particular in Figure 5, can be slidingly and axially coupled with the spindle shaft 102 and comprises:
- ball means 2 for locking/releasing a tool holder T;
- an element 10 suited to operate the locking/releasing ball means 2 provided with at least one duct 14 for delivering a lubricant and/or coolant F.

According to the invention, the device 1 also comprises a sealing element 15 suited to hydraulically connect the delivery duct 14 of the fluid F to the discharge duct P of the fluid F present in said tool holder T when the tang C of the tool holder T is coupled with the device 1 as shown in Figure 1b.

More particularly, in the preferred embodiment of the invention illustrated herein, said sealing element 15 comprises a substantially cylindrical and hollow element 16, slidingly and coaxially coupled with the element 10. Said cylindrical element 16 has a shaped end 16a, suited to come into contact with the tang C of the tool holder T in order to create the above mentioned watertight area G visible in Figure 1b.

More precisely, said end 16a comprises an annular surface having a profile conjugated with the terminal surface E of the tang C of the tool T.

More particularly, in the embodiment represented herein, said surface has a substantially truncated-cone shaped profile and substantially matches the whole corresponding truncated cone-shaped surface of the tang C.

In this regard, it should be remembered that the tangs C have standard dimensions as defined by the specific rules applying thereto.

It should also be noted that said annular surface is made of a material suitable for improving its watertightness.

More particularly, in a preferred embodiment of the invention said surface belongs to an insert 17.

More precisely, in the example illustrated herein, said insert 17 is made of a material preferably comprising cured rubber.

The presence of the insert 17 further makes it possibile to provide an extended contact surface, visible in Figure 1b, which guarantees greater tightness to the fluids used during the machining stage.

It should also be observed that said at least one sealing element 15 is integral with the spindle shaft 102 and therefore rotates together with the tool T. This advantageously prevents the deterioration of the surfaces suited to create the watertight area G.

It should be observed that in other preferred embodiments of the invention, not represented herein, the sealing element 15 is constituted by the end of the element 10. More particularly, in this case, the end of the element defines the sealing surface, which is provided with the above mentioned insert 17. This solution advantageously makes it possible to reduce the number of components of the spindle, thus reducing its production costs and the number of moving parts. In the preferred, non-limiting example of embodiment represented in particular in Figure 5, the device 1 also comprises means 9 suited to maintain the sealing element 15 in contact with the tang C when the tool holder T is inserted in the spindle 1.

In other words, the so-called watertight duct for the passage of the coolant is carried out with a sealing element 15 that is movable in relation to the element 10. This solution advantageously makes it possible to increase watertightness, guaranteeing it also in case of axial movements of the tool holder T that take place during use.

More particularly, in the non-limiting example illustrated herein, said means 9 consist of first elastic means that comprise a helical spring 19 having one end 19a suited to counteract the sealing element 15 and the other end 19b suited to counteract the element 10 and in particular a first shoulder 18a of the same. It should be noted that the spring 19 is arranged outside the element 10 and is not affected by the passage of the fluid F. This guarantees longer working life of the spring itself.

This solution guarantees, in addition to the release of the tool holder T, also the ejection of the tool T with a given axial movement, that is, a given stroke, of the element 10. More particularly, the proposed solution advantageously makes it possible to obtain the release of the tool T with a stroke that is considerably shorter than the stroke required by the spindles of known type. This advantageously makes it possible to reduce the overall dimensions and the mechanical stress to which the various parts involved are subjected. According to a preferred embodiment of the invention, said stroke is preferably equal to only 5,5 mm, as will be highlighted in greater detail below, and therefore is much shorter than the stroke achieved in the known solutions, which exceeds 7 mm.

It is also clear that in other embodiments of the invention said means 9 can be constituted by other elements suitable for the same purpose, like for example Belleville washers or elastic members.

As regards the locking/releasing ball means 2, they comprise a tubular support 3 that can be slidingly and axially coupled with the spindle shaft 102.

The tubular support 3 defines a seat 4 for the tang C of the tool T and is provided with one or more openings 5, each one facing the seat 4 and suited to accomodate a ball 6.

It should also be noted that, in the preferred embodiment of the invention illustrated herein, the spindle shaft 102 is also provided with an annular expansion seat 107 suited to accommodate at least partially the balls 6.

As far as the element 10 is concerned, according to the preferred non-limiting embodiment illustrated herein, it comprises a hollow rod 20.

As already explained, said rod 20 is suited to interfere with the support 3 in order to move it.

More particularly, the rod 20 counteracts, by means of a second shoulder 18b, one end 3a of the support 3.

The rod 20 can furthermore be connected to a moving tie rod 122 of the spindle 100.

More particularly, the two rods 20 and 122 can be connected via connection means comprising, in the non-limiting example of embodiment illustrated herein, corresponding threads, respectively indicated by the numbers 23 and 123 in Figures 4 and 5, made in corresponding parts of the rods 20 and 122 themselves. The tie rod 122 is moved along the axis 8 by an actuator, not illustrated herein and preferably of the pneumatic or hydraulic type, in order to move the support 3 from a first axial position to a second axial position.

More precisely, the support 3 is axially movable in relation to the spindle shaft 102 and in particular it can move from at least one first axial position, shown in Figure 2, to at least one second axial position, shown in Figure 3.

It should be noted that in the first axial position the balls 6 counteract the spindle shaft 102 and project from each opening 5 towards the seat 4 in order to counteract the tang C of the tool holder T and lock it in such position, as described in greater detail below and visible in Figure 1b.

In the second axial position the openings 5 are arranged at the level of the annular expansion seat 7 in order to allow the balls 6 to move radially away from the longitudinal axis 8 of the device 1 and of the spindle shaft 102 so as to engage the annular seat 107 and free the tang C, thus allowing the tool holder T to be released.

As can be observed, the proposed solution advantageously makes it possible to avoid flooding the seat 4 and the expansion chamber 107 with the fluid F. Again advantageously, the proposed solution also prevents the balls 6 from being affected by the presence of the fluid F.

This means that the fluid F is confined in the canalization ducts 14 and P provided and directed completely towards the head H of the tool mounted on the tool holder T.

It should also be noted that the element 10 is also suited to ensure the ejection of the tool holder T.

In fact, as will be described in greater detail below, the end 20a of the rod 20 is suited to be placed in contact with the tang C in order to push it axially out of the seat 7. It should be noted that advantageously, according to the preferred embodiment of the invention illustrated herein, the spindle 100 comprises elastic means 125 suited to maintain said locking/releasing means 2 in one of said positions. More precisely, said elastic means 125 are suited to maintain the tubular support 3 in one of the said positions and more particularly, in the example illustrated herein, in the first axial resting position shown in Figure 2. More particularly, said elastic means 125 are constituted by a compression spring 126 having a first end 126a that counteracts the spindle shaft 102 and the other end 126b that counteracts the element 10 through the tie rod 122.

Said elastic means 125 continuously exert a force in the direction indicated by number 127 in Figures 2 and 3.

In other words, said elastic means 125 maintain the tool holder T connected to the spindle shaft 102.

At the back of the spindle shaft 102 there is a device, not represented herein, suited to convey the fluid F into the duct 123 that communicates with the delivery duct 14.

It should also be observed that both the device 1 and the spindle are provided with a series of sealing elements, each one preferably constituted by an annular gasket of the O ring type, made of a plastic material, like for example rubber, Teflon, NBR, Viton or similar or equivalent materials, indicated by number 28 in Figures 4 and 5.

More particularly, there are O rings 28 arranged between the support 3 and the sealing element 15, between the rod 20 and the spindle shaft 102 and between the sealing element 15 and the rod 20.

It should be observed that each O ring 28 is arranged in a specific housing provided in one of the two elements with which it is in contact.

According to a further embodiment of the invention, the balls 6 have longer diameter than those present in the known solutions.

This advantageously allows the load that can be supported by the spindle to be considerably increased.

This also makes it possible to guarantee higher reliability and duration in terms of hours of operation of the spindle.

This also avoids any problems concerning the breakage of the balls 6 during the operation of the spindle with the possible risk of releasing the tool during the machining stages.

More particularly, the diameter of the balls 6 exceeds 5 mm.

Preferably, the diameter of the balls is substantially equal to 7 mm.

As regards the annular seat 107 made in the spindle shaft 102, it comprises a first substantially cylindrical first portion 107a and a second portion 107b substantially in the shape of a truncated cone, visible in particular in Figure 4. More particularly, the taper of the second portion 107b depends on the diameter of the balls 6.

More precisely, said taper is such as to favour the rolling of the balls 6 during the coupling/release of the tool holder T with/from the spindle 100.

It is also clear that the spindle shaft 102 and the other parts are preferably maintained coaxial with one another by means of bearings that can be pneumatic bearings, ball bearings or the like.

As regards the tool holder T, visible in particular in Figure 1b, it comprises a main body B provided at one end with a head H suited to accomodate the tool and at the other end with the tang C.

The main body is also provided with an outlet duct P for the fluid F, suited to be placed in communication with the delivery duct 14 of the fluid F present on the device 1 and on the spindle 100.

More precisely, said outlet duct P ends on one side towards the workhead H and on the other side towards the tang C.

It should also be observed that the tangs C of the tool holder are standardized in terms of dimensions and that the proposed solution makes it possible, in any case, to eject the tool with a given axial movement of the support.

The operation of the device and of the spindle of the invention will be described below with reference to the embodiment shown in Figure 2.

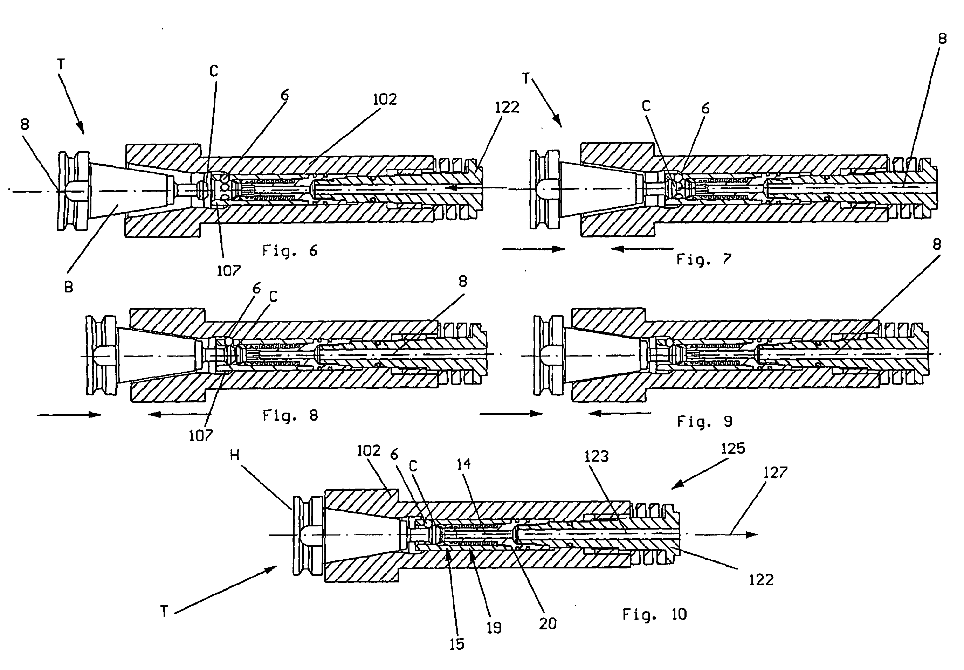

From an operational point of view, to mount the tool holder T on the spindle 100 the actuator pushes the rod 20 and then the support 3 through the rod 122, until the balls 6 are at the level of the annular seat 107, as shown in Figure 6, thus further compressing the elastic means 125.

Successively, the tool holder T and the spindle 100 are reciprocally moved near each other until the tang C, and in particular its truncated cone-shaped end, comes into contact with the balls 6, as schematically shown in Figure 7.

A further approaching movement causes a radial movement of the balls 6 away from the axis 8 of the device 1 and of the spindle 100, as schematically shown in Figure 8.

This means that the balls 6 thus occupy the annular expansion seat 107.

Owing to the continued reciprocal approaching motion, the balls 6 move further away from the axis 8 and then, after surpassing the shoulder present on the tang C and deactivating the actuator, they approach the axis 8 again due to gravity, rolling on the truncated cone-shaped face 107b, as schematically shown in Figure 9.

Successively, the actuator is deactivated and the elastic means 125, through the rods 122 and 20, move the support back to the first axial position that can be assumed, as shown in Figure 10.

In this position the balls 6 counteract the spindle shaft 102 that prevents any radial movement of the same in relation to the axis 8.

In this position the elastic means 19 push the sealing element 15 against the tang C of the tool holder T, thus achieving watertightness.

In this situation, as well as during the machining stage in which the tool rotates, the balls 6 are closed inside the profile created on the spindle shaft 102 and prevent the detachment of the tool holder T thanks to the geometry of the tang C of the tool holder (said component, in a preferred non-limiting embodiment of the invention, preferably complies with the MAS 403 BT1 Standard applied to the production of tool holder cones).

It should be noted that the elastic means 125 generate an axial force indicated by number 127 in Figure 9, which through the rods 122 and 20 is transmitted to the support 3 that further counteracts every axial movement of the tool in the opposite direction.

The lubricant/coolant F is introduced, under pressure, in the delivery duct 123, 14 and reaches the head H of the tool T through the outlet duct P.

It should be noted that the sealing element 15 is maintained in contact with the tang C of the tool holder through the helical spring 19 that is not affected by the passage of the coolant F.

More particularly, said spring 19 pushes the two facing surfaces of the tang C and of the element 15 against each other, thus achieving the desired watertightness.

To release the tool holder T, the actuator that moves the rod 122 is operated, thus generating an axial load that compresses the elastic means 125.

As a consequence of the above, the support 3 is moved to the second axial position, thus releasing the balls 6 that, in this way, are free to settle inside the annular expansion seat 107 specially made in the spindle shaft 102.

More particularly, the actuator thus pushes first the support 3 to the position shown in Figure 9 and then, through the rod 20, pushes directly the tang C of the tool holder T, moving the balls 6 radially away and pushing them into the seat 107, finally releasing the tool holder T.

More precisely, the rod 20, always pushed by the rod 122, will come into contact with the tang C of the tool, thus obtaining its complete ejection from the seat 4.

It should be observed that the ejection stroke, that is, the axial movement of the rod 20, is fixed and guaranteed by the rod that is integral with the tie rod 122. Once the ejection has been completed, the actuator, for example the hydraulic or pneumatic piston, will return to its initial position, allowing the elastic means 125 to move the spindle back to the position shown in Figure 2.

In other words, in the case where no tool is inserted, the device 1 retracts internally, assuming a rest position shown in Figure 2.

Obviously, various modifications can be made to the spindle and electric spindle that are the subjects of the present invention, without departing from the scope or object of the invention.

For example, the elastic means can consist of Belleville washers and the actuator can be mechanic. It should therefore be noted that the scope of the present invention is defined by the claims, including all forms equivalent to those claimed.

The above description clearly shows that the solution proposed allows the drawbacks described to be eliminated.

Practically, it has been ascertained that the clamping device, the spindle and the related electric spindle constructed according to the present invention achieve the set objects, thus overcoming the drawbacks encountered in the state of the art. The solution proposed advantageously makes it possible to provide a watertight clamping device of the so-called "ball collet" type.

In other words, the proposed solution provides a clamping device, a spindle and/or an electric spindle of the so-called type with balls, in which the coolant and/or lubricant flows directly from the delivery duct into the working area.

It should also be observed that, advantageously, the ejection of the tool is guaranteed by the presence of a rigid element that, through the external action of a pneumatic cylinder or a similar component, pushes it out of the seat 4 of the clamping device 1.

Still advantageously, the proposed solution makes it possible to provide a clamping device, a spindle, an electric spindle that are more reliable than comparable devices of known type.

Even though the invention has been described making reference to the attached drawings, upon implementation changes can be made that shall all be considered protected by the present patent, provided that they fall within the scope of the inventive concept expressed in the following claims.

It is also important to remember that when the details mentioned in the claims below are followed by references, these must be understood as meant to improve the comprehensibility of the claim in question and not as a limit to the interpretation of the same.

Without going beyond the scope of the invention, the person skilled in the art can change and improve the clamping device, the spindle and the related electric spindle (watertight ball collet) of the invention as suggested by the natural evolution of the art. It should also be underlined that all the parts can be replaced with other technically equivalent parts, that any material can be used, provided that it is compatible with the intended use, and that the various elements can have any size, depending on the needs.

## Claims

1. Clamping device (1) suited to be installed on a spindle shaft (102), comprising:
- ball means (2) for locking/releasing a tool holder (T), said ball means comprising a tubular support (3) that can be slidingly and axially coupled with a spindle shaft (102), said tubular support (3) defining a seat (4) suited to accommodate the tang (C) of said tool holder (T) and being provided with one or more openings (5) suited to house a ball (6);
- an element (10) that comprises a hollow rod (20) preferably moved by an actuator, said element (10) being suited to operate said locking/releasing ball means (2) provided with at least one duct (14) for delivering a coolant and/or lubricant (F),
**characterized in that** it also comprises a sealing element (15) that comprises a substantially cylindrical and hollow element (16), slidingly and coaxially coupled with said element (10), said sealing element (15) being suited to hydraulically connect said at least one duct (14) to a duct (P) for discharging the fluid (F) present in said tool holder (T) when it is coupled to said device (1).

2. Device (1) according to claim 1)**, characterized in that** said sealing element (15) is movable in relation to said element (10).

3. Device (1) according to claims 1) or 2), **characterized in that** said sealing element (15) has a shaped end (16a), suited to come into contact with the tang (C) of said tool holder (T) in order to create a watertight area (G).

4. Device (1) according to any one of the preceding claims, **characterized in that** said shaped end (16a) comprises an annular surface having a profile conjugated with the terminal surface (E) of said tang (C).

5. Device (1) according to claim 4), **characterized in that** the profile of said surface is substantially in the shape of a truncated cone.

6. Device (1) according to any one of the preceding claim **characterized in that** the surface of said sealing element that is suited to achieve water tightness belongs to an insert (17).

7. Device (1) according to claim 6), **characterized in that** said insert (17) is made of a material preferably comprising cured rubber.

8. Device (1) according to any one of the preceding claims, **characterized in that** it also comprises means (9) suited to maintain said at least one sealing element (15) into contact with said tang (C) when said tool holder (T) is inserted in said spindle.

9. Device (1) according to claim 8), **characterized in that** said means (9) comprise elastic means arranged between said sealing element (15) and said element (10).

10. Device (1) according to any one of the preceding claims, **characterized in that** one end (20a) of said rod (20) is suited to be placed in contact with the tang (C) in order to release it from said device (I).

11. Device (1) according to any one of the preceding claims, **characterized in that** said tubular support (3) is axially movable from at least one first position in which said balls (6) project from each opening (5) towards said seat (4) to lock said tool holder to at least one second axial position in which said openings (5) are arranged at the level of an annular expansion seat (107) made in said spindle shaft (102) in order to allow said balls (6) to move radically away from the axis (8) of said spindle shaft (102) and release said tool holder (T).

12. Device (1) according to any one of the preceding claims, **characterized in that** the diameter of said balls (6) exceeds 5 mm.

13. Spindle (100) comprising a spindle shaft (102) and a device (1) for clamping a tool holder (T), **characterized in that** said clamping device (1) is constructed in accordance with the contents of any one of the preceding claims.

14. Spindle (100) according to claim 13), **characterized in that** said element (10) is slidingly and axially coupled with said spindle shaft (102).

15. Spindle (100) according to claim 13) or 14), **characterized in that** said at least one sealing element (15) is integral with said spindle shaft (102).

16. Spindle (100) according to claims 13) or 14) or 15), **characterized in that** it also comprises elastic means (125) suited to maintain said locking/releasing means (2) in a given position.

17. Spindle (100) According to claim 16), **characterized in that** said plastic means (125) are constituted by a compression spring (126) having a first end (126a) that counteracts said spindle shaft (102) and the other end (126b) that counteracts said element (10) through a tie rod (122).

18. Spindle according to claim 14) or 15) or 16), **characterized in that** said element (10) is slidingly and axially coupled with said spindles shaft (102) and is suited to move said tubular support (3) axially through a tie rod (122).

19. Spindle (100) according to any one of the claims from 13) to 18), **characterized in that** it also comprises a seat (107) made in said spindle shaft (102) suited to accommodate the balls (6) of said locking/releasing means (2), said seat (107) comprising a portion (107b) that substantially has the shape of a truncated cone.

20. Electric spindle (500) comprising a spindle (100) and an electric motor suited to set rotating the spindle shaft (102) of said spindle (100) inside which there is a clamping device (1), **characterized in that** said spindle is constructed according to any one of the claims from 13 to 19.

21. Electric spindle (500) according to claim 20), **characterized in that** it also comprises an actuator suited to move said element (10) in order to activate/deactivate said locking/releasing means (2).

## Patentansprüche

1. Klemmvorrichtung (1), an einer Spindelwelle (102) installierbar, und Folgendes umfassend:
- Kugelmittel (2) zum Blockieren/Lösen eines Werkzeughalters (T), wobei die besagten Kugelmittel eine röhrenförmige Halterung (3) umfassen, welche gleitend und axial mit einer Spindelwelle (102) gekuppelt werden kann, wobei die besagte röhrenförmige Halterung (3) eine Aufnahme (4) definiert, die geeignet ist, den Dom (C) des besagten Werkzeughalters (T) aufzunehmen und eine oder mehrere Öffnungen (5) für die Aufnahme einer Kugel (6) aufweist;
- ein Element (10), das eine Hohlstange (20) umfasst, die vorzugsweise durch einen Aktuator bewegt wird, wobei dieses Element (10) geeignet ist, die Kugelmittel (2) zum Blockieren/Lösen zu betreiben und wenigstens einer Leitung (14) für die Ausgabe eines Kühl- und/oder Schmiermittels (F) umfasst,
**dadurch gekennzeichnet, dass** sie außerdem ein Dichtelement (15) umfasst, welches ein im Wesentlichen zylindrisches und hohles Element (16) umfasst, welches gleitend und koaxial mit dem besagten Element (10) gekuppelt ist, und wobei das besagte Dichtelement (15) geeignet ist, die besagte wenigstens eine Leitung (14) hydraulisch mit einer Leitung (P) für den Ablass der in dem besagten Werkzeughalter ((T) befindlichen Flüssigkeit (F) zu verbinden, wenn es mit der besagten Vorrichtung (1) verbunden wird.

2. Vorrichtung (1) gemäß Patentanspruch 1), **dadurch gekennzeichnet, dass** das besagte Dichtelement (15) bezüglich des besagten Elements (10) beweglich ist.

3. Vorrichtung (1) gemäß den Patentansprüchen 1) oder 2), **dadurch gekennzeichnet, dass** das besagte Dichtelement (15) ein geformtes Ende (16a) hat, welches geeignet ist, mit dem Dorn (C) des besagten Werkzeughalters (T) in Kontakt zu kommen, um einen wasserdichten Bereich (G) zu bilden.

4. Vorrichtung (1) gemäß eines jeden der vorstehenden Patentansprüche, **dadurch gekennzeichnet, dass** das besagte geformte Ende (16a) eine ringförmige Oberfläche umfasst, deren Profil der Abschlussfläche (E) des besagten Doms (C) zugeordnet ist.

5. Vorrichtung (1) gemäß Patentanspruch 4), **dadurch gekennzeichnet, dass** das Profil der besagten Oberfläche im Wesentlichen kegelstumpfförmig ist.

6. Vorrichtung (1) gemäß eines jeden der vorstehenden Patentansprüche, **dadurch gekennzeichnet, dass** die Oberfläche des besagten Dichtelements für die Erreichung der Wasserdichtigkeit zu einem Einsatzstück (17) gehört.

7. Vorrichtung (1) gemäß Patentanspruch 6), **dadurch gekennzeichnet, dass** das besagte Einsatzstück (17) aus einem Material gefertigt ist, das vorzugsweise vulkanisiertes Gummi enthält.

8. Vorrichtung (1) gemäß eines jeden der vorstehenden Patentansprüche, **dadurch gekennzeichnet, dass** sie außerdem Mittel (9) umfasst, die geeignet sind, das besagte, wenigstens eine Dichtelement (15) in Kontakt mit dem besagten Dorn (C) zu halten, wenn der besagte Werkzeughalter (T) in die besagte Spindel eingesetzt ist.

9. Vorrichtung (1) gemäß Patentanspruch 8), **dadurch gekennzeichnet, dass** die besagten Mittel (9) elastische Mittel umfassen, die zwischen dem besagten Dichtelement (15) und dem besagten Element (10) angeordnet sind.

10. Vorrichtung (1) gemäß eines jeden der vorstehenden Patentansprüche, **dadurch gekennzeichnet, dass** ein Ende (20a) der besagten Stange (20) geeignet ist, in Kontakt mit dem Dom (C) in Kontakt gebracht zu werden, um ihn von der besagten Vorrichtung (1) zu lösen.

11. Vorrichtung (1) gemäß eines jeden der vorstehenden Patentansprüche, **dadurch gekennzeichnet, dass** die besagte röhrenförmige Halterung (3) axial aus wenigstens einer ersten Position, in der die besagten Kugeln (6) aus jeder Öffnung (5) herausragen, zu der besagten Aufnahme (4) hin bewegt werden kann, um den besagten Werkzeughalter in wenigstens einer zweiten axialen Position zu blockieren, in der die besagten Öffnungen (5) auf der Ebene einer ringförmigen Spreizaufnahme (107) in der besagten Spindelwelle (102) angeordnet sind, damit die besagten Kugeln (6) sich radial von der Achse (8) der besagten Spindelwelle (102) entfernen und den besagten Werkzeughalter (T) lösen können.

12. Vorrichtung (1) gemäß eines jeden der vorstehenden Patentansprüche, **dadurch gekennzeichnet, dass** der Durchmesser der besagten Kugeln (6) größer ist als 5 mm.

13. Spindel (100) mit einer Spindelwelle (102) und einer Vorrichtung (1) zum Einklemmen eines Werkzeughalters (T), **dadurch gekennzeichnet, dass** die besagte Klemmvorrichtung (1) gemäß den Angaben eines jeden der vorstehenden Patentansprüche ausgeführt ist.

14. Spindel (100) gemäß Patentanspruch 13), **dadurch gekennzeichnet, dass** das besagte Element (10) gleitend und axial mit der besagten Spindelwelle (102) gekuppelt ist.

15. Spindel (100) gemäß den Patentansprüchen 13) oder 14), **dadurch gekennzeichnet, dass** das besagte wenigstens eine Dichtelement (15) mit der besagten Spindelwelle (102) eine Einheit bildet.

16. Spindel (100) gemäß den Patentansprüchen 13) oder 14) oder 15), **dadurch gekennzeichnet, dass** sie außerdem elastische Mittel (125) umfasst, die geeignet sind, die besagten Blockier- und Lösemittel (2) in einer gegebenen Position zu halten.

17. Spindel (100) gemäß Patentanspruch 16), **dadurch gekennzeichnet, dass** die besagten elastischen Mittel (125) aus einer Druckfeder (126) bestehen, deren erstes Ende (126a) der besagten Spindelwelle (102) entgegenwirkt, und deren anderes Ende (126b) über eine Zugstange (122) dem besagten Element (10) entgegenwirkt.

18. Spindel (100) gemäß den Patentansprüchen 14) oder 15) oder 16), **dadurch gekennzeichnet, dass** das besagte Element (10) gleitend und axial mit der besagten Spindelwelle (102) gekuppelt ist und geeignet ist, die besagte röhrenförmige Halterung (3) axial über eine Zugstange (122) zu bewegen.

19. Spindel (100) gemäß eines jeden der Patentansprüche von 13) bis 18), **dadurch gekennzeichnet, dass** sie außerdem eine Aufnahme (107) in der besagten Spindelwelle (102) umfasst, die geeignet ist, die Kugeln (6) der besagten Blockier- und Lösemittel (2) aufzunehmen, wobei diese Aufnahme (107) einen im Wesentlichen kegelstumpfförmigen Abschnitt (107b) umfasst.

20. Elektrospindel (500), eine Spindel (100) und einen Elektromotor umfassend, der geeignet ist, die Spindelwelle (102) der besagten Spindel (100) in Drehung zu versetzen, wobei sich in der besagten Spindel eine Klemmvorrichtung (1) befindet, **dadurch gekennzeichnet, dass** die besagte Spindel gemäß eines jeden der Patentansprüche von 13 bis 19 ausgeführt ist.

21. Elektrospindel (500) gemäß Patentanspruch 20), **dadurch gekennzeichnet, dass** sie außerdem einen Aktuator umfasst, der geeignet ist, das besagte Element (10) zu bewegen, um die besagten Blockier- und Lösemittel (2) zu aktivieren/zu deaktivieren.

## Revendications

1. Dispositif de serrage (1) apte à être installé sur un arbre de mandrin (102), comprenant :
- des moyens à billes (2) pour le blocage/déblocage d'un porte-outil (T), lesdits moyens à billes comprenant un support tubulaire (3) qui peut être accouplé de manière coulissante et axiale avec un arbre de mandrin (102), ledit support tubulaire (3) définissant un siège (4) apte à loger le tenon (C) dudit porte-outil (T) et étant doté d'une ou plusieurs ouvertures (5) aptes à loger une bille (6) ;
- un élément (10) qui comprend une tige creuse (20) préférablement déplacée par un actionneur, ledit élément (10) étant indiqué pour actionner lesdits moyens à billes (2) de blocage/déblocage doté d'au moins un conduit (14) de refoulement d'un fluide lubrifiant et/ou réfrigérant (F),
**caractérisé en ce qu'**il comprend en outre un élément d'étanchéité (15) qui comprend un élément essentiellement cylindrique et creux (16), accouplé de manière coulissante et coaxiale avec ledit élément (10), ledit élément d'étanchéité (15) étant indiqué pour relier hydrauliquement ledit au moins un conduit (14) à un conduit (P) pour l'évacuation du fluide (F) présent dans ledit porte-outil (T) quand il est accouplé audit dispositif (1).

2. Dispositif (1) selon la revendication 1), **caractérisé en ce que** ledit élément d'étanchéité (15) est mobile par rapport sudit élément (10).

3. Dispositif (1) selon les revendications 1) ou 2), **caractérisé en ce que** ledit élément d'étanchéité (15) présente une extrémité galbée (16a), apte à être en contact avec le tenon (C) dudit porte-outil (T) de façon à créer une zone étanche à l'eau (G).

4. Dispositif (1) selon l'une quelconque des revendications précédentes, **caractérisé en ce que** ladite extrémité galbée (16a) comprend une surface annulaire ayant un profil conjugué avec la surface finale (E) dudit tenon (C).

5. Dispositif (1) selon la revendication 4), **caractérisé en ce que** le profil de ladite surface est essentiellement en forme de cône tronqué.

6. Dispositif (1) selon l'une quelconque des revendications précédentes, **caractérisé en ce que** la surface dudit élément d'étanchéité qui est indiqué pour réaliser l'étanchéité hydraulique appartient à une pièce ajoutée (17).

7. Dispositif (1) selon la revendication 6), **caractérisé en ce que** ladite pièce ajoutée (17) est réalisée en un matériel préférablement comprenant du caoutchouc vulcanisé.

8. Dispositif (1) selon l'une quelconque des revendications précédentes, **caractérisé en ce qu'**il comprend en outre des moyens (19) indiqués pour maintenir ledit au moins un élément d'étanchéité (15) en contact avec ledit tenon (C) quand ledit porte-outil (T) est inséré dans ledit mandrin.

9. Dispositif (1) selon la revendication 8), **caractérisé en ce que** lesdits moyens (9) comprennent des moyens élastiques positionnés entre ledit élément d'étanchéité (15) et ledit élément (10).

10. Dispositif (1) selon l'une quelconque des revendications précédentes, **caractérisé en ce que** une extrémité (20a) de ladite tige (20) est indiquée pour être mise en contact avec le tenon (C) de façon à le relâcher dudit dispositif (1).

11. Dispositif (1) selon l'une quelconque des revendications précédentes, **caractérisé en ce que** ledit support tubulaire (3) peut être déplacé axialement d'au moins une première position dans laquelle lesdites billes (6) saillent de chaque ouverture (5) vers ledit siège (4) pour bloquer ledit porte-outil à au moins une deuxième position axiale dans la quelle lesdites ouvertures (5) sont positionnées à hauteur d'un siège annulaire d'expansion (107) réalisé dans ledit arbre de mandrin (102) de façon à permettre auxdites billes (6) de s'éloigner radialement de l'axe (8) dudit arbre de mandrin (102) et à relâcher ledit porte-outil (T).

12. Dispositif (1) selon l'une quelconque des revendications précédentes, **caractérisé en ce que** le diamètre desdites billes (6) dépasse 5 mm.

13. Mandrin (100) comprenant un arbre de mandrin (102) et un dispositif de serrage (1) d'un porte-outil (T), **caractérisé en ce que** ledit dispositif de serrage (1) est réaslisé en conformité avec le contenu d'une quelconque des revendications précédentes.

14. Mandrin (100) selon la revendication 13), **caractérisé en ce que** ledit élément (10) est accouplé de manière coulissante et axiale avec ledit arbre de mandrin (102).

15. Mandrin (100) selon les revendications 13) ou 14), **caractérisé en ce que** ledit au moins un élément d'étanchéité (15) est solidaire dudit arbre de mandrin (102).

16. Mandrin (100) selon les revendications 13), 14) ou 15), **caractérisé en ce qu'**il comprend en outre des moyens élastiques (125) indiqués pour maintenir lesdits moyens de blocage/déblocage (2) dans une position donnée.

17. Mandrin (100) selon la revendication 16), **caractérisé en ce que** lesdits moyens élastiques (125) sont constitués par un ressort de compression (126) ayant une première extrémité (126a) qui contraste ledit arbre de mandrin (102) et l'autre extrémité (126b) qui contraste ledit élément (10) au moyen d'un tirant (122).

18. Mandrin selon les revendications 14), 15) ou 16), **caractérisé en ce que** ledit élément (10) est accouplé de manière coulissante et axiale avec ledit arbre de mandrin (102) et est indiqué pour déplacer axialement ledit support tubulaire (3) au moyen d'un tirant (122).

19. Mandrin (100) selon l'une quelconque des revendications de 13) à 18), **caractérisé en ce qu'**il comprend également un siège (107) réalisé dans ledit arbre de mandrin (102) indiqué pour loger les billes (6) desdits moyens de blocage/déblocage (2), ledit siège (107) comprenant une portion (107b) qui présente une forme essentiellement de cône tronqué.

20. Mandrin électrique (500) comprenant un mandrin (100) et un moteur électrique indiqué pour mettre en rotation l'arbre de mandrin (102) dudit mandrin (100) dans lequel est présent un dispositif de serrage (1), **caractérisé en ce que** ledit mandrin est réalisé en conformité avec l'une quelconque des revendications de 13) à 19).

21. Mandrin électrique (500) selon la revendication (20), **caractérisé en ce qu'**il comprend en outre un actionneur indiqué pour déplacer ledit élément (10) de façon à actionner/désactionner ledits moyens de blocage/déblocage (2).
